# EUROPEAN PATENT APPLICATION

(11) **EP 1 953 505 A1**
(43) Date of publication of application: **06.08.2008**
(21) Application number: 08150639.6
(22) Date of filing: 25.01.2008
(51) Int. Cl.: G01D 5/347, G01D 5/38

(54) **Encoder**

(30) Priority: 05.02.2007 JP 2007025860
(71) Applicant: Sendai Nikon Corporation, Natori-shi, Miyagi 981-1221 (JP)
(72) Inventor: Susumu, Makinouchi, Chiyoda-ku Tokyo 100-8331 (JP); Akihiro, Watanabe, Chiyoda-ku Tokyo 100-8331 (JP); Toru, Imai, Chiyoda-ku Tokyo 100-8331 (JP)
(74) Representative: Viering, Jentschura & Partner

(57) **Abstract**

An illumination light to be used for position measurement of a movable scale is spatially (or physically) split into a first illumination light and a second illumination light using a triangle prism, and the first and second illumination lights are made to be incident on the same position on the movable scale, so that positional information of the movable scale is detected by utilizing interference of the first and second illumination lights. The spatially split first and second illumination lights interfere with each other even when they are made to be incident on the same position of the movable scale and are completely overlapped with each other, which is different, for example, from the case of the ±1^{st} order diffracted lights that are generated by an illumination light being ± 1^{st} order diffracted by a diffraction grating. Therefore, wasted illumination lights that do not contribute to the interference can be minimized and the use efficiency of illumination lights can be improved.

## Description

The present invention relates to encoders, and more particularly to an encoder that optically detects positional information of a movable body.

In recent years, various types of encoders by a diffraction interference method have been proposed that utilize an interference light that is generated by splitting a modulated illumination light using an index scale or the like and by overlapping these split illumination lights with each other (e.g. refer to the pamphlet of International Publication No. WO 2006/064801). In these types of encoders by a diffraction interference method, since an illumination light is split using, for example, a diffraction grating or a beam splitter, interference does not occur when completely overlapping two illumination lights with each other. Therefore, in the case of generating the interference light, only part of each of split illumination lights can be overlapped, which causes the inconvenience that the light amount of illumination lights that contribute to the interference decreases and, as a consequence, the light amount of the interference light decreases.

The present invention has been made in consideration of the situation described above, and according to an aspect of the present invention, there is provided an encoder that detects positional information of a movable body by utilizing interference of a modulated illumination light, the encoder comprising: a movable scale that is fixed to the movable body and has patterns arranged in a movement direction of the movable body; and an optical system that spatially splits the illumination light into a first illumination light and a second illumination light, and irradiates the first illumination light and the second illumination light in an overlapped state on the patterns of the movable scale.

With this encoder, a modulated illumination light is spatially split into a first illumination light and a second illumination light by the optical system. Accordingly, even if the first illumination light and the second illumination light are made to be incident on the patterns of the movable scale in a state where both the first and second illumination lights completely overlap, the first and second illumination lights interfere with each other, and therefore the use efficiency of illumination lights can be improved.

In the accompanying drawings;
FIG. 1 is a view showing the schematic configuration of an encoder 10 related to an embodiment of the present invention;
FIG. 2 is a view showing the schematic configuration of an encoder 10A related to a modified example;
FIG. 3 is a view showing the schematic configuration of an encoder 10B related to another modified example;
FIG. 4 is a view showing the schematic configuration of an encoder 10C related to yet another modified example; and
FIG. 5 is a view showing the schematic configuration of an encoder 10D related to still another modified example.

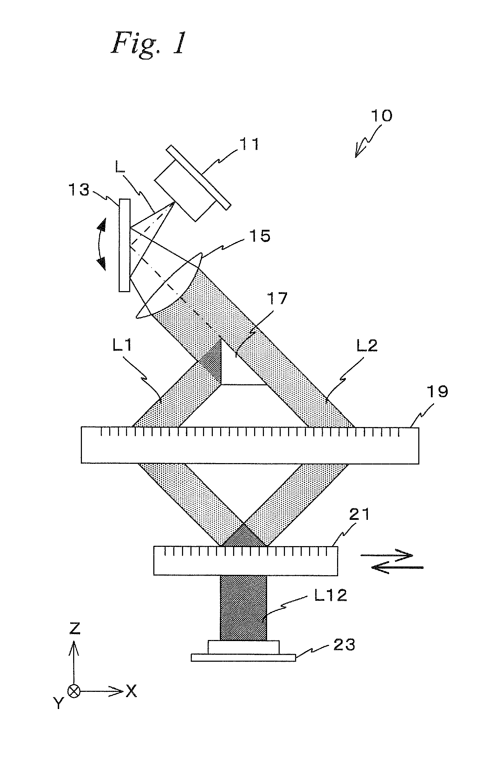

An embodiment of the present invention will be described below, with reference to FIG. 1. FIG. 1 shows the schematic configuration of an encoder 10 related to an embodiment of the present invention. Encoder 10 is a linear encoder by a diffraction interference method that detects a movement direction, a movement distance, or a displacement of a movable body that moves in a predetermined direction (an X-axis direction).

As is shown in FIG. 1, encoder 10 is equipped with a light source 11, a scan mirror 13, a collimator lens 15, a triangle prism 17, a diffraction grating for deflection 19, a movable scale 21, a photodetection element 23 and the like.

Light source 11 emits a coherent divergent light, for example, an illumination light L having a wavelength λ (=850nm) toward a direction which is angled at 45 degrees left-obliquely downward (a direction that is orthogonal to a Y-axis and is angled at 45 degrees with respect to an X-axis and a Z-axis) in FIG. 1.

Scan mirror 13 is placed in an optical path of illumination light L emitted from light source 11. Scan mirror 13 is finely vibrated periodically by being turned around an axis that is parallel to the Y-axis as is indicated by an arrow in FIG. 1, by a drive mechanism (not shown), to periodically modulate incident illumination light L and also reflect the light toward a direction which is angled at 45 degrees right-obliquely downward.

Collimator lens 15 shapes illumination light L that has been reflected by scan mirror 13 into roughly parallel lights.

Triangle prism 17 is a prism that has a surface parallel to an XY plane and a surface parallel to a YZ plane, and has a cross-sectional shape of isosceles right triangle. Triangle prism 17 is placed in the optical path of illumination light L so that a longitudinal direction of triangle prism 17 is in the Y-axis direction and the surface parallel to the YZ plane (hereinafter, also referred to as a reflection surface) is included in part of a projection plane of illumination light L. Triangle prism 17 reflects part of illumination light L, which has been incident on the reflection surface, toward a direction which is angled at 45 degrees left-obliquely downward. Hereinafter, an illumination light reflected in the direction which is angled at 45 degrees left-obliquely downward by triangle prism 17 is assumed to be an illumination light L1 and an illumination light that propagates in a direction which is angled at 45 degrees right-obliquely downward without being reflected by triangle prism 17 is assumed to be an illumination light L2. Further, it is assumed that illumination light L is split by triangle prism 17, for example, so that the light amount of illumination light L1 and that of illumination light L2 equal to each other, and a projection plane shape of illumination light L1 and that of illumination light L2 on diffraction grating for deflection 19 (to be described later) equal to each other.

Diffraction grating for deflection 19 is placed below triangle prism 17. Diffraction grating for deflection 19 is a transmissive scale in which a diffraction grating whose periodic direction is the X-axis direction is formed. Illumination lights L1 and L2 that have been incident on diffraction grating for deflection 19 are diffracted by diffraction grating for deflection 19 in a direction which is angled at 45 degrees right-obliquely downward and in a direction which is angled at 45 degrees left-obliquely downward respectively, and are severally incident on the substantially same position on movable scale 21.

Movable scale 21 is placed below diffraction grating for deflection 19 so as to be movable in the X-axis direction. Movable scale 21 is a transmissive scale in which a diffraction grating whose periodic direction is the X-axis direction is formed. Illumination lights L1 and L2 that have been incident on movable scale 21 are severally diffracted downward by movable scale 21 and are incident on photodetection element 23 in a state of interfering with each other. Hereinafter, illumination lights L1 and L2 that transmit movable scale 21 are comprehensively referred to as an interference light L12.

Photodetection element 23 is placed below movable scale 21. When interference light L12 is incident on photodetection element 23 via movable scale 21, photodetection element 23 outputs a photoelectric conversion signal (hereinafter, referred to as I(t)) in accordance with the interference degree of interference light L12.

Photoelectric conversion signal I(t) includes positional information of movable scale 21, and the positional information and movement information of movable scale 21 can be computed by performing the processing described in, for example, the U.S. Patent No. 6,639,696.

As is described above, in encoder 10 related to the present embodiment, illumination light L reaches triangle prism 17 before being incident on movable scale 21 and part of illumination light L is reflected off the reflection surface of triangle prism 17, so that illumination light L is spatially (or physically) split into illumination light L1 and illumination light L2. Spatially split illumination lights L1 and L2 interfere with each other and interference light L12 can be obtained even if the split illumination lights are made to be incident on the same position (area) on movable scale 21 and are completely overlapped, which is different from the case of a +1^{st} order diffracted light and a -1^{st} order diffracted light that are generated by, for example, a modulated illumination light being ±1^{st} order diffracted by a diffraction grating at each position of the grating. Accordingly, by making illumination light L1 and illumination light L2 be incident on movable scale 21 in a state of almost completely overlapping, it becomes possible to minimize wasted illumination lights that do not contribute to the interference out of incident illumination lights L1 and L2 and to improve the use efficiency of illumination lights.

In the case of using the +1^{st} order diffracted light and the -1^{st} order diffracted light that are generated by a modulated illumination light being diffracted at each position of a diffraction grating, it is necessary to make the ±1^{st} order diffracted lights that are generated at different positions of the diffraction grating be incident on the same position of a movable scale and make them interfere, because the interference does not occur when the ±1^{st} order diffracted lights generated at one certain position of the diffraction grating are made to be incident on the same position of the movable scale. That is, in order to make the +1^{st} order diffracted light and the -1^{st} order diffracted light interfere with each other, it is necessary to make the respective diffracted lights be incident on the movable scale in a state where only part of the +1^{st} order diffracted light beams and part of the -1^{st} order diffracted light beams overlap with each other, which has been the obstacle to improvement of the use efficiency of illumination lights.

Incidentally, in the embodiment above, the description has been made on the assumption that illumination light L1 and illumination light L2 are severally incident on the same position on movable scale 21. However, the present invention is not limited thereto, and the incident position of illumination light L1 and that of illumination light L2 do not have to coincide completely. This is because illumination light L1 and illumination light L2 interfere with each other and an interference light that includes positional information of movable scale 21 or the like can be obtained even if the incident positions do not completely coincide.

Further, in the embodiment above, the case has been described where there is no difference in the light amount between illumination light L1 and illumination light L2, but the present invention is not limited thereto, and there may be the difference in the light amount between illumination lights L1 and L2, and the shape of the projection planes of illumination lights L1 and L2 on diffraction grating for deflection 19 may also be different. Also in this case, illumination light L1 and illumination light L2 interfere with each other and an interference light that includes positional information of movable scale 21 or the like can be obtained. Further, the incident position on movable scale 21 can be considered, for example, with reference to the gravity center of the projection plane on diffraction grating for deflection 19 or the like.

Further, in the embodiment above, illumination light L is spatially split into two illumination lights, illumination light L1 and illumination light L2 using triangle prism 17 before illumination light L is incident on movable scale 21, but, for example, a reflection mirror may also be placed so that a reflection surface of the reflection mirror is parallel to the YZ plane.

Further, as an optical element that splits illumination light L, various optical elements can be considered, besides the optical element that splits illumination light L by reflecting part of illumination light L. Four examples will be specifically described below.

### <<Modified Example 1>>

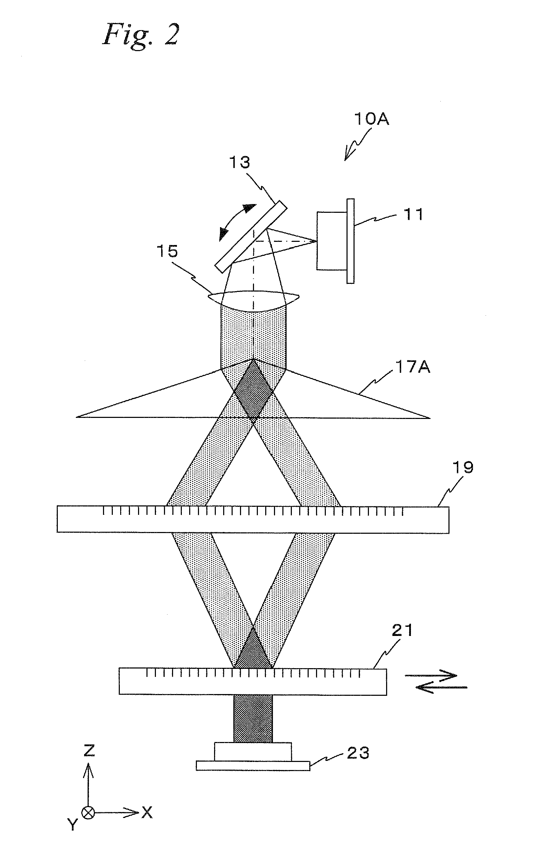

FIG. 2 is a view showing an encoder 10A related to a modified example 1. Encoder 10A has a prism 17A whose vertex angle is obtuse instead of triangle prism 17 having surfaces that are orthogonal to each other, which is a different point from encoder 10. In encoder 10A, prism 17A is placed so that two surfaces with the vertex angle in between are located within a projection plane of an illumination light modulated by scan mirror 13, and after an illumination light is spatially split into two illumination lights by prism 17A, the illumination lights are made to be incident on the same position on the upper surface of movable scale 21 by diffraction grating for deflection 19. In encoder 10A, the projection plane of each illumination light that is formed on diffraction grating for deflection 19 has a semicircular shape that is symmetric to the Y-axis, but since the illumination lights are incident on the same position on the upper surface of movable scale 21, it becomes possible to minimize wasted illumination lights that do not overlap with each other and do not contribute to the interference and to improve the use efficiency of illumination lights.

### <<Modified Example 2>>

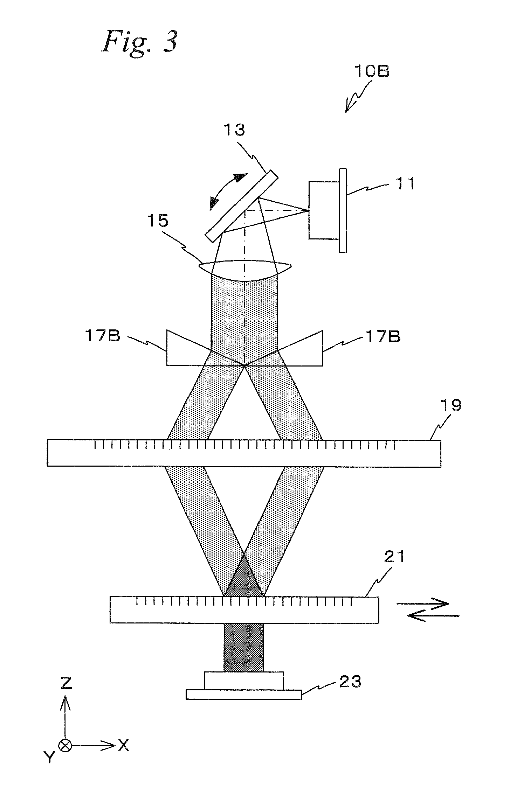

FIG. 3 is a view showing an encoder 10B related to a modified example 2. In encoder 10B, the function of prism 17A that is used in encoder 10A related to the modified example 1 described above is realized by combining a pair of prisms 17B. As is shown in FIG. 3, in encoder 10B, a pair of prisms 17B are placed so that the inclined surfaces of prisms 17B face each other. After an illumination light is spatially split into two illumination lights by a pair of prisms 17B, the illumination lights are made to be incident on the same position on the upper surface of movable scale 21 by diffraction grating for deflection 19. Accordingly, it becomes possible to minimize wasted illumination lights that do not contribute to the interference and to improve the use efficiency of illumination lights in encoder 10B.

Incidentally, a pair of prisms 17B are used in this modified example, but a pair of prisms 17B may be integrally molded by, for example, glass mold press, injection molding, or the like. The point is that as long as a prism is capable of spatially splitting an illumination light, the shape of the prism is not limited in particular.

### «Modified Example 3»

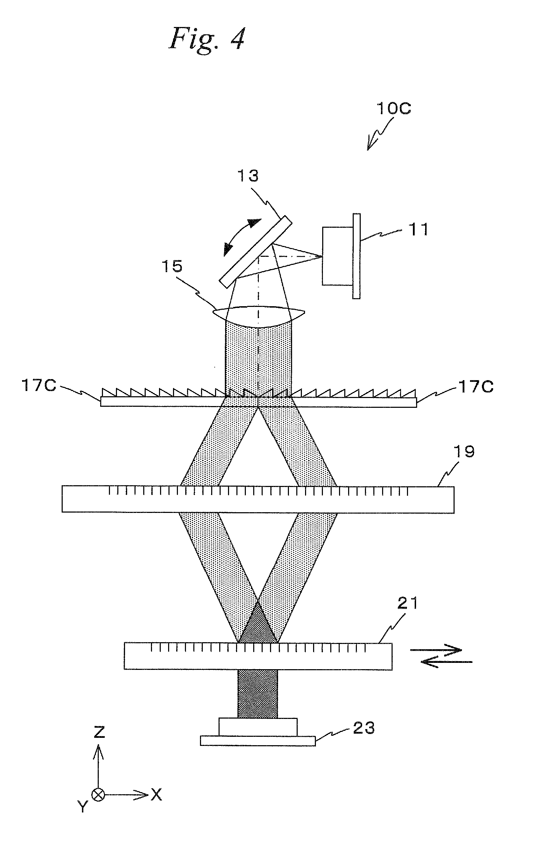

FIG. 4 is a view showing an encoder 10C related to a modified example 3. In encoder 10C, the function of prism 17A used in encoder 10A related to the modified example 1 described above is realized by combining a pair of blazed diffraction gratings 17C. As is shown in FIG. 4, in encoder 10C, a pair of blazed diffraction gratings 17C are placed so that both of them are located within a projection plane of an illumination light. An illumination light incident on blazed diffraction grating 17C on the -X side is diffracted in a left-oblique-downward direction, and an illumination light incident on blazed diffraction grating 17C on the +X side is diffracted in a right-oblique-downward direction. Illumination lights that have been spatially split by a pair of blazed diffraction gratings 17C as is described above are made to be severally incident on the same position on the upper surface of movable scale 21 by diffraction grating for deflection 19. Accordingly, it becomes possible to minimize wasted illumination lights that do not contribute to the interference and to improve the use efficiency of illumination lights in encoder 10C. Further, by using a blazed diffraction grating as an element for splitting an illumination light, unnecessary diffraction of the illumination light can be suppressed and stray lights in the optical system can effectively be reduced.

### «Modified Example 4»

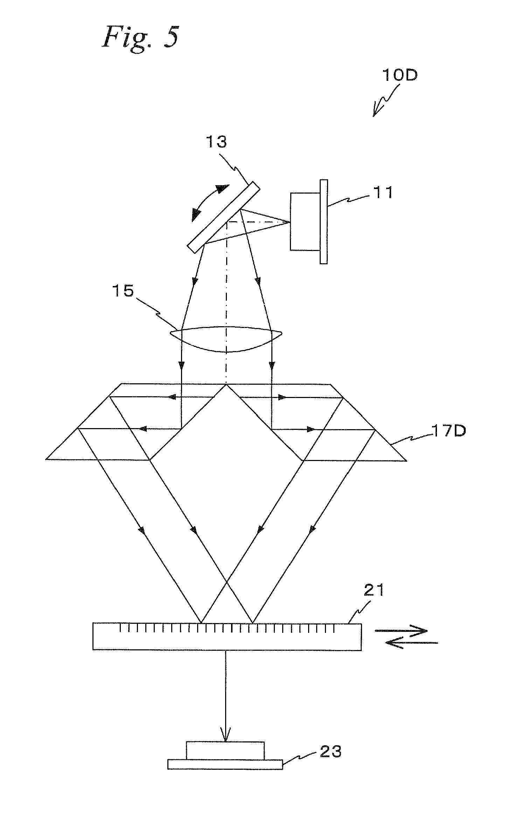

FIG. 5 is a view showing an encoder 10D related to a modified example 4. Encoder 10D differs from encoder 10 related to the embodiment above in that an optical system that spatially splits an illumination light and makes the split illumination lights be incident on movable scale 21 is configured by a pair of prisms 17D. As is shown in FIG. 5, in encoder 10D, a pair of prisms 17D each having a parallelogram cross-sectional shape are placed so as to be located within a projection plane of an illumination light. An illumination light modulated by scan mirror 13 is incident on each of a pair of prisms 17D, thereby being split into two illumination lights. Then, each of the split illumination lights is emitted from the lower surface of prism 17D after being internally reflected in prism 17D, and the emitted illumination lights are made to be incident on the same position on the upper surface of movable scale 21. Accordingly, it becomes possible to minimize wasted illumination lights that do not contribute to the interference and to improve the use efficiency of illumination lights in encoder 10D.

Further, in encoder 10D, since the illumination lights are incident on movable scale 21 by utilizing the internal reflection of a pair of prisms 17D, the light amount loss can be reduced comparing with, for example, the case of making an illumination light be diffracted by a diffraction grating and be incident on movable scale 21.

Further, in encoder 10D, a pair of prisms 17D serves as an optical element that splits an illumination light and also serves as optical element that makes each of split illumination lights be incident on movable scale 21. Therefore, the optical system has the simple configuration, which makes it possible to decrease the influence of unstable factors such as thermal expansion.

Further, a pair of prisms 17D are used in this modified example, but a pair of prisms 17D may also be integrally molded by glass mold press, injection molding, or the like. In addition, as long as each of a pair of prisms 17D has the function of spatially splitting an illumination light and making each of split illumination lights be incident on the same position on movable scale 21, the shape or the like of prism 17D is not limited in particular. Further, prisms 17D can be mass-produced at low cost by being integrally-molded by glass mold press, injection molding or the like as is described above.

Incidentally, in the embodiment above, although diffraction grating for deflection 19 is used when illumination lights are made to be incident on movable scale 21, the present invention is not limited thereto, and a reflection mirror may also be used instead of diffraction grating for deflection 19.

Further, in the embodiment above, the case has been described where an illumination light is modulated using scan mirror 13, but the modulation of an illumination light may also be performed by placing, for example, an electrooptic element made up of an EOM or an acoustooptic element made up of an AOM or the like in the optical path of an illumination light and driving the element.

Further, in the embodiment above, the case has been described where movable scale 21 moves, but the present invention is not limited thereto, and the present invention can be employed also in the case where sections other than movable scale 21 move. The point is that the encoder only has to have a configuration in which movable scale 21 and other optical members relatively move.

Further, in the embodiment above, the case has been described where diffraction grating for deflection 19, movable scale 21 and the like each have a phase grating, but the present invention is not limited thereto, and a scale that has an amplitude type diffraction grating (a contrast type diffraction grating) may also be employed. Moreover, a scale having an amplitude type diffraction grating and a scale having a phase grating may also be employed together.

Further, each of the encoders related to the embodiment and the modified examples described above is a linear encoder that detects positional information of a movable body in one axis direction, but the present invention is also suitable for a rotary encoder that detects a rotational amount of a rotatable body.

While the above-described embodiment of the present invention is the presently preferred embodiment thereof, those skilled in the art of encoders will readily recognize that numerous additions, modifications, and substitutions may be made to the above-described embodiment without departing from the spirit and scope thereof. It is intended that all such additions, modifications, and substitutions fall within the scope of the present invention, which is best defined by the claims appended below.

## Claims

1. An encoder that detects positional information of a movable body by utilizing interference of a modulated illumination light, the encoder comprising:
a movable scale that is fixed to the movable body and has patterns arranged in a movement direction of the movable body; and
an optical system that spatially splits the illumination light into a first illumination light and a second illumination light, and irradiates the first illumination light and the second illumination light in an overlapped state on the patterns of the movable scale.

2. The encoder according to Claim 1, wherein the optical system includes:
a split element that spatially splits the illumination light into a first illumination light and a second illumination light; and
an optical element that irradiates the first illumination light and the second illumination light in an overlapped state on the patterns of the movable scale.

3. The encoder according to Claim 2, wherein the split element is a prism that branches the illumination light.

4. The encoder according to Claim 2, wherein the split element is a prism that includes two different surfaces, at least part of each of the surfaces being placed in an illumination area of the illumination light.

5. The encoder according to Claim 2, wherein the split element includes two types of blazed diffraction gratings, at least part of each of the blazed diffraction gratings being placed in an illumination area of the illumination light.

6. The encoder according to Claim 1, wherein the optical system includes an optical element that splits the illumination light into a first illumination light and a second illumination light, and irradiates the first illumination light and the second illumination light in an overlapped state on the patterns of the movable scale by internal reflection of the optical element.

7. The encoder according to Claim 6, wherein the optical element includes a pair of prisms each having a square pole shape.
